## Europäisches Patentamt

## European Patent Office

## Office européen des brevets

(19)

(11) Publication number: **0 253 906**
**B1**

(12)

# EUROPEAN PATENT SPECIFICATION

(45) Date of publication of the patent specification:
**18.10.89**

(51) Int. Cl.⁴: **B29C 45/76, G05B 19/407**

(21) Application number: **86109929.9**

(22) Date of filing: **19.07.86**

(54) Apparatus for controlling machines having movable and stationary members.

(43) Date of publication of application:
**27.01.88 Bulletin 88/4**

(45) Publication of the grant of the patent:
**18.10.89 Bulletin 89/42**

(84) Designated Contracting States:
**AT CH DE FR GB IT LI**

(56) References cited:
EP-A- 0 105 203
EP-A- 0 132 353
EP-A- 0 167 630
EP-A- 0 168 804
US-A- 4 488 098

(73) Proprietor: TOSHIBA KIKAI KABUSHIKI KAISHA, 2-11, Ginza 4-Chome Chuo-ku, Tokyo-To(JP)

(72) Inventor: Kaneko, Toshihiko c/o Toshiba Kikai K.K., Numazu Jigyosho 2068-3, Ooka, Numazu-Shi Shizuoka-Ken(JP)
Inventor: Sasaki, Yoshinari c/o Toshiba Kikai K.K., Numazu Jigyosho 2068-3, Ooka, Numazu-Shi Shizuoka-Ken(JP)
Inventor: Oda, Etsuji c/o Toshiba Kikai K.K., Numazu Jigyosho 2068-3, Ooka, Numazu-Shi Shizuoka-Ken(JP)
Inventor: Kurita, Naoki c/o Toshiba Kikai K.K., Numazu Jigyosho 2068-3, Ooka, Numazu-Shi Shizuoka-Ken(JP)

(74) Representative: Reichel, Wolfgang, Dipl.-Ing. et al, Reichel und Reichel Parkstrasse 13, D-6000 Frankfurt am Main 1(DE)

## Description

### BACKGROUND OF THE INVENTION

This invention relates to an apparatus for controlling a movable member of a machine including movable and stationary members and, more particularly, to an apparatus for controlling an injection molding machine and a die cast machine so as to cause the members to engage each other at a high speed without a shock when a movable member is urged against a stationary member or when an injection nozzle is urged against a stationary mold. The invention will be described taking an injection molding machine as an example.

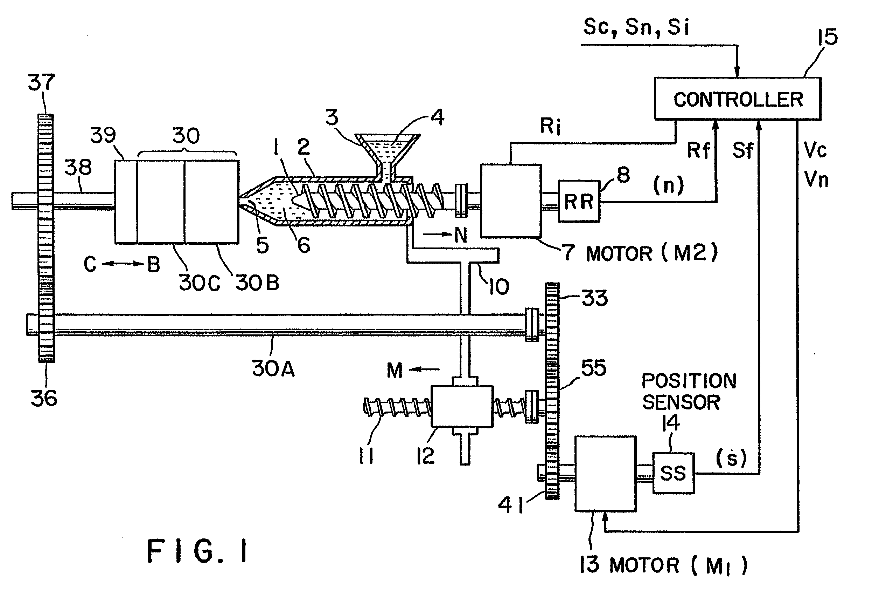

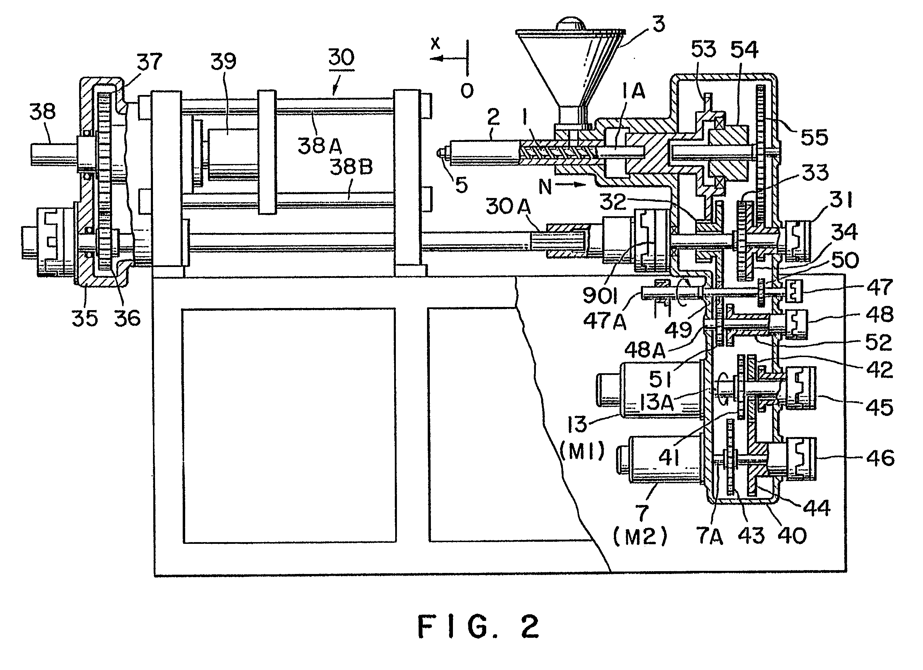

Fig. 2 shows a basic construction of an injection molding machine to which the invention is applicable and which is principally known from the EP-A 0 168 804, which discloses the features of the pre-characterizing part of the independent claim. In Fig. 2, electric motors 7 and 13 are secured to a casing 40, the motor 7 being used for injection filling and metering of resin, while motor 13 being used for mold clamping and nozzle urging. Gears 41 and 42 are mounted on the shaft 13A of motor 13 while gears 43 and 44 are mounted on the shaft 7A of motor 7, and the driving forces of these gears 41 ~ 44 are transmitted or not by the operations of clutch mechanisms 45 and 46 provided at respective ends of the shafts 7A and 13A. Motion transmitting shafts 47A and 48A are journalled by casing 40 to which the driving forces are transmitted or not by the operations of clutch mechanisms 47 and 48. Gears 49 and 50 are mounted on shaft 47A, while gears 51 and 52 are mounted on shaft 48A. Further a drive shaft 30A for moving a movable metal mold 30C (see Fig. 1) constituting a metal mold 30 having an inner cavity is journalled by the casing 40. Inside of the casing 40, are mounted gears 32 ~ 34 on shaft 30A to which the driving power is transmitted or not by a clutch mechanism 901 at one end of shaft 30A. A gear 36 is mounted on drive shaft 30 in a lefthand casing 35 for driving an operating shaft 38 through a gear 37 for sliding a mold supporting member 39 along guide rods 38A and 38B so as to reciprocate a movable metal mold 30C with respect to a stationary metal mold 30B, thus closing or opening the mold. Furthermore, in the casing 40 is provided a shaft 1A connected with a screw 1, and a gear 52 is mounted on shaft 1A. A gear 65 is mounted on a shaft 54 supported in gear 53 through a bearing 54.

The injection molding machine described above operates as follows. Thus a series of operations are repeated including advancement of the movable metal mold 30C against the stationary metal mold 30B, pressure rise for increasing the mold clamping pressure advancement of nozzle 5 toward the stationary metal mold 30B, filling molten resin into the metal mold by injection, metering, and cooling for plasticizing the resin retraction of nozzle 5 toward the casing 40, pressure decrease and mold opening, and ejection of a product molded in the metal mold. Fig. 2 shows the initial state of the injection molding machine. For effecting mold clamping and pressure rise, motor 13 is energized for driving drive shaft 30A through gears 41 and 33 and a gear, not shown, interposed therebetween. Then the shaft 38 is driven through gears 36 and 37 for advancing the movable metal mold. When the movable mold is stopped and the mold is clamped, clutch 901 is released to interrupt transmission of driving power to gear 36 from gear 33. At the same timer, clutch mechanisms 45 and 47 are transferred for rotating only shaft 47A for moving casing 40 toward metal mold thereby advancing nozzle 5 to the stationary mold 30B. The nozzle 5 is retracted by reversing the direction of rotation of motor 13, while mold opening is effected by rotating motor 13 in a direction opposite to the case of mold clamping so as to retract the movable metal mold 30C.

As the nozzle 5 is urged against the stationary metal mold 30B, screw 1 is rotated to convey resin 4 contained in a hopper 3 to an injection cylinder 2. During this time, the resin is heated by a heater, not shown, and blended and kneaded to be plasticized. Due to the pressure of the resin 6 contained in the cylinder 2, the screw 1 is urged rearwardly in the direction of arrow N. The injection molding machine is constructed such that air would not be sucked into cylinder 2 and nozzle 5 through hopper 3 so that an accurate metering of the resin can be made. When clamping together movable metal mold 30C secured to a support 39 and stationary metal mold 30B by controlling the speed of motor 13, the movable metal mold 30C is advanced toward stationary metal mold 30B, and as the movable metal mold 30C sufficiently approaches to the stationary metal mold 30B, the control is switched to a pressure control. After engagement, both metal molds are abutted against each other under a predetermined pressure. When the position or time at which the speed control is transferred to the pressure control from the speed control is not definite, the speed or pressure would vary discontinuously when the speed control is transferred to the pressure control. In addition, when the speed of the movable metal mold 30C is too large at the time when the movable metal mold 30C comes to engage the stationary mold 30B, both metal molds would be damaged due to a large impact force because both molds are made of rigid metal. The vibration caused by the impact force elongates the interval in which engagements of both metal molds under a predetermined pressure completes. When a braking force is applied before the vibration decreases to zero, incomplete abutment would be resulted. Further, unless the speed at the time of engagement is constant, the mold clamping force would vary.

In the same manner, at the time of advancing the nozzle 5 toward the metal mold 30, the speed of motor 13 is controlled by speed controller 15 by means of a signal representing the present portion of the nozzle and by means of an instruction signal generated to represent the distance to the point at which the nozzle comes to engage the metal mold at substantially zero speed. The control is transferred to pressure control when the movable metal mold 30C sufficiently approaches the stationary metal mold 30B. In such control, however, there are such problems that when the speed control is transferred to the pressure control, the speed or pressure varies discontinuously due to indefiniteness of the position or time at which the speed control is transferred to the pressure control, that the nozzle 5 and the metal mold 30 are both damaged due to shock when the contact speed is high, and that due to a vibration caused by contact it takes a long time before the nozzle and metal molds abut against each other under a predetermined pressure. On the other hand, when a braking force is applied to nozzle 5 before complete attenuation of the vibration, a firm abutting would not be obtained. Further, unless the speed of the nozzle is not constant, the pressure against the metal mold would vary.

A motion control system for controlling deceleration of a movable element which is to be moved at the maximum rate possible between two positions has been proposed in the EP-A-0 105 203 for a rapid advance motor on a slide transfer machine. The high moving rate is achieved by generating a velocity profile during the acceleration portion of the move which indicates the acceleration ability of the motor drive end the element. Under the assumption of equivalent performance capability during the acceleration and deceleration motion the acceleration velocity profile data is used to determine the exact moment when deceleration should start and the rate at which deceleration should occur to smoothly halt at the desired end point. Accordingly storing means and a position feedback circuit having programmable resolution for developing the velocity profile are necessary.

A further similar motor control system in a positioning device is known from EP-A 0 132 353. A servomotor is controlled by sensing the current motor positions respectively and reading out for each detected position a corresponding speed instruction value from a ROM speed table the values of which are based on a desired velocity profile taking into consideration the motor characteristics and the distance to the target point. The above speed control systems indeed allow to minimize the time required to move a machine element between two positions, however, cannot solve the above mentioned problems arising when a movable and a stationary member have to be firmly engaged.

## SUMMARY OF THE INVENTION

Accordingly, it is an object of this invention to provide a novel apparatus for controlling a machine including movable and stationary members capable of moving at a high speed a movable member toward a stationary member and firmly engaging the movable and stationary members without shock.

According to one aspect of this invention, there is provided apparatus for controlling a machine including a movable member, a stationary member which are abutted together and separated away during the operation of the machine and drive means of the movable means, the apparatus comprising means for generating a signal Sl representing a distance between the present position of the movable member and a point at which the movable member comes to engage the stationary member at substantially zero speed, position sensing means driven by the drive means for producing a signal Sf representing the present position of the movable member, means for generating a signal Sn representing a target distance, means for obtaining a difference signal (Sn–Sf), a comparator for comparing the signal Sl with the difference signal (Sn–Sf) to produce signal Vd when the compared signals are substantially equal, and a deceleration instruction generator responsive to the signal Vd for applying a deceleration instruction Vn to the drive means.

The invention is advantageously applicable to an injection molding machine and reliably reduces the nozzle speed to substantially zero when the nozzle engages the metal mold so that the nozzle can be stably urged against the metal mold without any shock and vibration by switching the control to pressure control. The same holds true for the movable metal mold. Besides this, the invention is applicable to any machine including a stationary member and a movable member which is to be moved towards the stationary member at a high speed and is to firmly engage the stationary member.

## BRIEF DESCRIPTION OF THE DRAWINGS

In the accompanying drawings:

Fig. 1 is a diagrammatic representation showing an injection molding machine and a control apparatus to which the invention is applicable;

Fig. 2 is a side view, partly in section, showing the detail of the construction of the injection molding machine shown in Fig. 1;

Fig. 3 is a block diagram showing a control system utilized in this invention;

Fig. 4 is a block diagram showing the control system shown in Fig. 1,

Fig. 5 is a flow chart useful to explain the operation of the control system shown in Fig. 4;

Fig. 6a is a flow chart for use in a special case; and

Fig. 6b is a flow chart for use in a general case.

## DESCRIPTION OF THE PREFERRED EMBODIMENT

A preferred embodiment of this invention shown in Figs. 1 and 2 will be described.

Suppose now that a mold clamping position instruction Sc, an injection molding nozzle abutting position instruction Sn and a screw position instruction Si are sequentially applied to a controller 15. At first, at the time of mold clamping, a speed signal Vc calculated to move the movable metal mold 30C toward the stationary metal mold 30B in the direction B at a normal speed is supplied to motor (M1) 13. The rotation of this motor 13 is transmitted to shaft 38 through gears 41, 55, 33, drive shaft 30A and gears 36 and 37, whereby the movable metal mold 30C is advanced. During this advancement, a position sensor 14 periodically detects the axial position of shaft 38 so as to supply to controller 15 a feedback signal Sf representing the position S of the movable metal mold 30C. Thus the controller 15 supervises the speed and position of the movable metal mold 30C.

After clamping the metal mold 30 as above described, when the nozzle 5 is urged against the stationary metal mold 30B, a speed signal Vn calculated to advance the nozzle 5 at a normal speed is supplied to motor 13 for driving a ball screw 11 through gears 41 and 55, whereby the nozzle 5 mounted on a support 10 driven by ball screw 11 through a ball nut 12 is advanced toward the stationary metal mold 30B. During this advancement, the position sensor 14 coupled to motor 13 periodically sends to the controller 15 the feedback signal Sf representing the position of the ball nut 12, that is the position of nozzle 5. Thus the controller 15 supervises the position and speed of the nozzle 5.

As the front end of the nozzle 5 is urged against the stationary mold 30B, the resin is injected into the metal mold. At this time, a screw rotation signal Ri calculated according to the screw position instruction Si is applied to motor (M2) 7, whereby the motor 7 rotates the screw 1. Resin 4 is supplied into cylinder 2 from hopper 3 is sheared and kneaded by screw 1 and resin 6 thus plasticized fills the cylinder 2 and is then injected into the metal mold. Due to the pressure of the resin 6 contained in the cylinder 2, the screw 1 retracts in the direction of arrow N. At this time, an accurate quantity of the resin is measured while preventing external air from being sucked into the cylinder 2. A revolution number sensor 8 coupled to motor 7 detects the number of rotations n of screw 1 to supply a screw rotation number feedback signal Rf to controller 15.

Thus according to this invention since the speed control is executed such that the movable metal mold 30C or nozzle 5 is advanced at a high speed, that the speed is once reduced to zero immediately prior to or at the time of engagement of movable metal mold 30C or nozzle 5 with stationary metal mold 30B, and that when the movable metal mold 30C or nozzle 5 is brought into contact with stationary metal mold 30B at a low speed and low pressure, the shock at the time of contact can be made small, and a perfect abutting can be ensured in a short time. The operations of urging the movable metal mold 30C or nozzle 5 against stationary metal mold 30B are effected with a common motor (M1) 13 by merely switching clutch 901, and moreover since the methods of controlling the operations are the same, in the following, a method of controlling the urging of nozzle 5 against metal mold 30 will be described in detail.

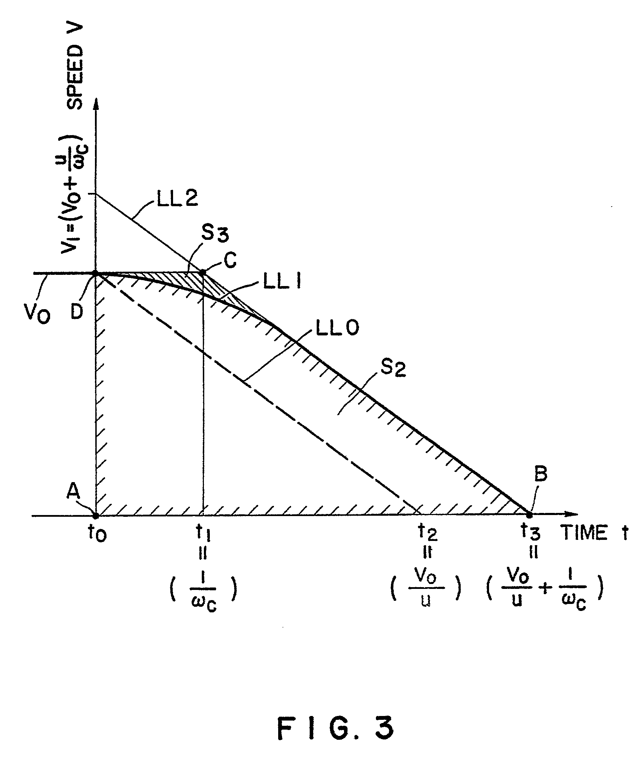

Fig. 3 is a graph showing the operating characteristic of the nozzle 5 useful to explain the principle of this invention, in which the abscissa represents the time t and the ordinate the speed V of the nozzle 5. At time $t_0$ the nozzle speed is $V_0$. Although a speed instruction shown by a characteristic curve LL0 is issued at time $t_0$, the actual speed of nozzle 5 is shown by a characteristic curve LL1 showing that the speed becomes zero at time $t_3$. In Fig. 3, u represents a deceleration and $\omega c$ a speed loop gain. The principle of this invention will be described with reference to the operating characteristics shown in Fig. 3. More particularly, the nozzle speed is controlled to have a value $V_0$, and the speed and position are periodically supervised in a manner described above. At a time when the difference between a position at which nozzle 5 comes into contact with metal mold 30 and the present position becomes equal to a distance necessary to decelerate the present speed such that the nozzle speed would become zero at a time when the nozzle comes into contact with metal mold 30, the deceleration is commenced. More particularly at time $t_0$ a speed instruction of a characteristic LL0 is issued, and so long as the nozzle 5 is moved just according to this instruction, the nozzle speed would become zero at time $t_2$. However, since the nozzle 5 has certain inertia, the actual speed would be shown by characteristic LL1 so that nozzle 5 will come to contact with metal mold 30 when the speed has reduced to zero at time $t_3$. The slope of the characteristic LL1 at zero speed is the same as that of the deceleration u. Since the speed $V_1$ at time $t_1$ at a cross-point C between characteristic LL2 and a straight line representing a constant speed $V_0$ is equal to a reciprocal of the speed loop gain $\omega c$, speed $V_1$ becomes $(V_0 + u/\omega c)$. Accordingly, time $t_3$ corresponds to $(V_0/u + 1/\omega c)$. Assume now that the distance necessary for decelerating the speed to zero at a point when nozzle 5 engages the metal mold 30 corresponds to an area SI bounded by points A, B, C and D, the following equation holds.

$$S1 = \frac{1}{2} \cdot \frac{V_0^2}{u} + \frac{V_0}{\omega c} \quad \ldots\ldots\ldots\ldots\ldots(1)$$

Since the actual movement of nozzle 5, however, is represented by characteristic LL1, the distance between a position of $t_0$ and a position at which the speed actually becomes zero would correspond to an area $S_2$ bounded by straight lines AB and AD and curve LL1. Denoting the area bounded by straight lines DC and BC and curve LL1 by $S_3$, we obtain the following equation.

$$S_2 = SI - S_3 \quad \ldots\ldots\ldots(2)$$

As a consequence, when a deceleration instruction is issued at a time when the distance before nozzle 5 engages the metal mold 30 becomes equal to a distance corresponding to area SI it is always possible to reduce the nozzle speed to zero at a time before engagement of the nozzle to the metal mold 30. Since the time during which the nozzle speed is reduced to zero is determined by the speed loop gain $\omega c$ it becomes possible to reduce to zero the nozzle speed at a point closer to the metal mold 30 as a larger speed gain $\omega c$ is selected. In other words, when the deceleration instruction is issued such that the nozzle speed becomes zero at a point near metal mold 30 there would be an opportunity that the nozzle 5 comes into contact with metal mold 30 before the nozzle speed is reduced to zero, thereby causing shock. It is thus the feature of this invention to reduce the nozzle speed to substantially zero when the the nozzle engages the netal mould. By switching the control to the pressure control from the speed control after the nozzle speed has reduced to zero the nozzle can be stably urged against the metal mold 30 without any shock and vibration.

The method of controlling the urging of the movable metal mold 30C against the stationary metal mold 30B at the time of mold clamping is the same as that described hereinabove.

It should be understood that the motors may be DC motors or AC motors, and that instead of moving the movable metal mold and the nozzle with a ball screw and a ball nut, these members can be moved along guide members by using electric motors.

As above described, according to the method of controlling an injection molding machine according to this invention, as it is possible to reduce the speeds of the movable metal mold 30C and of the nozzle to zero when the movable metal mold comes to engage the stationary metal mold, or before the nozzle comes to engage the metal mold 30, generation of shock or vibration at the time of engagement can be efficiently prevented. Moreover, the abutting force can be made constant irrespective of the speed of the movable metal mold or nozzle, thereby enabling to produce products of uniform quality and to reduce the production time.

While in the foregoing, the invention was described in terms of an injection molding machine, the invention is also applicable to a die cast machine which is different from the former in that molten metal poured in a cylinder is cast into a metal mold by a piston. In a broader aspect, the invention is applicable to any machine including a stationary member and a movable member which is moved toward and away from the stationary member at a relatively high speed.

The control apparatus according to this invention will now be described.

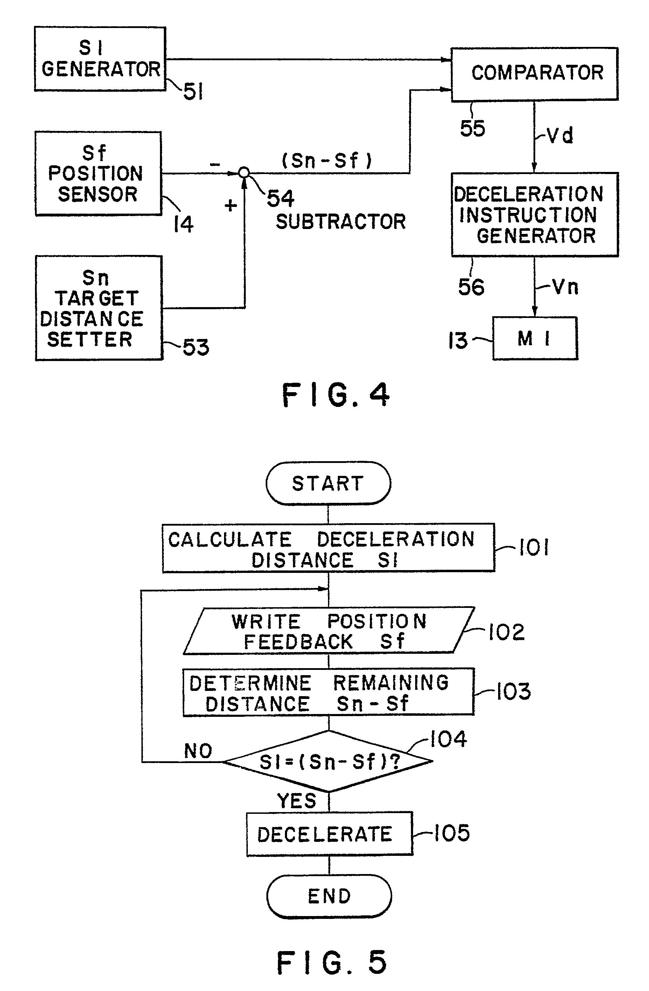

Fig. 4 is a block diagram showing the detail of the control system utilized in Figs. 1 and 2. In Fig. 4 a block 51 designates a generator for generating signal SI shown by equation (1). Signal SI is obtained by successively calculating area SI with a computer at each sampling cycle or pulse. Block 14 corresponds to position sensor 14 shown in Fig. 1 and generates a signal Sf representing the present position of the movable metal mold and utilized as a feedback signal. Block 53 shows a target distance (Sn) setter. In the case shown in Fig. 3, this corresponds to the distance between points A and B or a time $t_3$ at which the speed of the movable metal mold or of the plunger should be reduced to zero. Signals Sf and Sn are applied to a subtractor 54 to obtain a difference (Sn - Sf) representing a remaining distance over which the movable member must be moved. Signals SI and (Sn - Sf) are applied to a comparator 55 which sends a signal Vd to a deceleration instruction generator 56 when the compared signals are equal for applying a deceleration signal Vn to motor 13.

Turning now to the flow chart shown in Fig. 5, at step 101 a deceleration distance SI is calculated according to equation (1) with a computer. In other words, distance SI required for the deceleration operation is determined by the speed of the movable member and a deceleration parameter. Then at step 102, a position feedback signal Sf is written, and at step 103 remaining distance (Sn - Sf) is determined in a manner described above. Then at step 104, a check is made as to whether SI = (Sn - Sf) or not. When the result of check is NO the program is returned to step 102 for executing again steps 102 and 103, whereas when the result of check is YES, at step 105 the motor 13 is decelerated until its speed is reduced to zero.

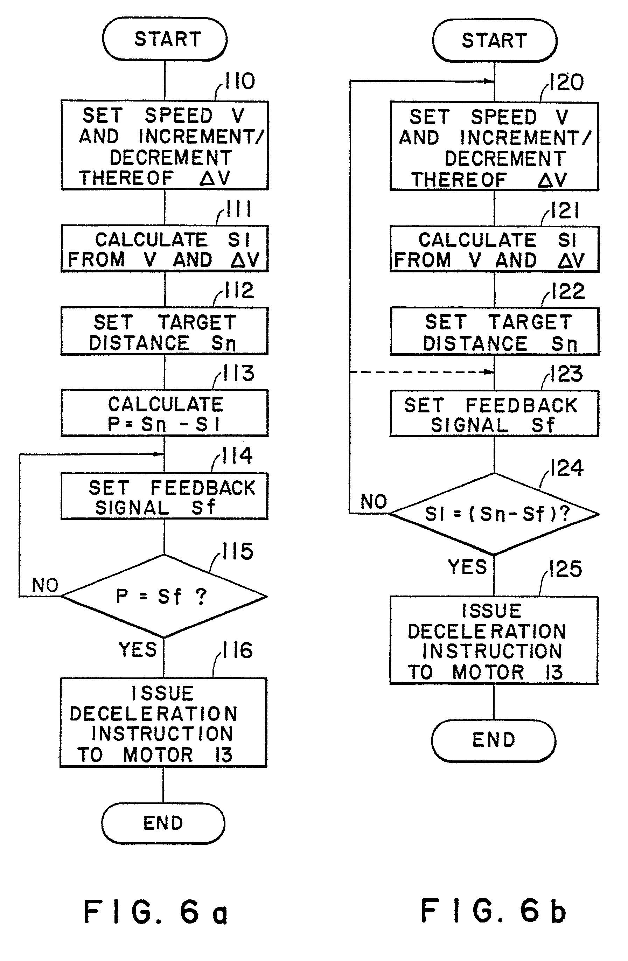

In a special case shown in Fig. 6a, at step 110 speed V of the movable member and an increment or decrement thereof ΔV are set. Then at step 111, SI is calculated by using V and ΔV, and at step 112 target distance Sn is set. At step 113, an equation P = Sn - Sf is calculated, and at step 114 feedback signal Sf is set. After that, at step 115 a check is made as to whether P = Sf or not. If the result of check is NO, the program is returned to step 114, whereas when the result of check is YES, at step 116, a deceleration instruction is issued to motor 13.

In a flow chart shown in Fig. 6b for use in a general case, operations executed at steps 120, 121, 122, 123 and 125 are the same as those executed at steps 110, 111, 117, 114 and 116 respectively shown in Fig. 6a. The flow chart shown in Fig. 6b is different from that shown in Fig. 6a in that, at step 124 a check is made as to whether SI is equal to (Sn - Sf) or not. If the result of check is NO, the programme is returned to step 120 to execute again steps 120, 121, 122 and 123, whereas when the result of check is YES, at step 125, a deceleration instruction is issued.

## Claims

1. Apparatus for controlling a machine including a movable member, a stationary member which are abutted together and separated away during an operation of said machine and drive means of said movable member; means (51) for a signal SI representing a distance between a present position of said movable member and a point at which said movable member comes to engage said stationary member at substantially zero speed; and position sensing means (14) driven by said drive means for producing a signal Sf representing the present position of said movable member, characterized by comprising:

means (53) for generating a signal Sn representing a target distance;
means (54) for obtaining a difference signal (Sn–Sf;
a comparator (55) for comparing said signal SI with said difference signal (Sn–Sf) to produce a signal Vd when said compared signals are substantially equal; and
a deceleration instruction generator (56) responsive to said signal Vd for applying a deceleration instruction to said drive means.

2. The apparatus according to claim 1, wherein said signal Sf is used as a feedback signal of said apparatus.

3. The said apparatus according to claim 1 wherein said comprises an injection molding machine constituted by a movable metal mold (3 LC), a stationary metal mold (30B), an injection nozzle 5 for injecting plasticized resin into a cavity defined by said movable and stationary metal molds when they are clamped together, a screw (1), contained in said nozzle for forming said plasticized resin, first drive means 13 for relatively moving said movable metal mold and said nozzle, and second drive means 7 for rotating said screw, said apparatus further comprising a revolution number sensor 8 driven by said second drive means generating for a signal Rf representing the number of resolutions of said screw, and means for applying said signal to a controller (15) provided for said apparatus.

**Patentansprüche**

1. Vorrichtung zur Steuerung einer Maschine, aufweisend ein bewegbares Teil, ein stationäres Teil, die man während der Betätigung der Maschine und einer Antriebseinrichtung des bewegbaren Teils aneinanderstoßen läßt und voneinander trennt, eine Einrichtung (51) zur Erzeugung eines Signals S1, welches eine Distanz zwischen einer augenblicklichen Position des bewegbaren Teils und einem Punkt darstellt, an dem das bewegbare Teil mit im wesentlichen einer Geschwindigkeit von Null in Eingriff mit dem stationären Teil gerät, und eine Positionserfassungseinrichtung (14), die von der Antriebseinrichtung derart angetrieben wird, daß sie ein Signal Sf erzeugt, das die augenblickliche Position des bewegbaren Teils darstellt, dadurch gekennzeichnet, daß sie aufweist:

eine Einrichtung (53) zur Erzeugung eines Signals Sn, das eine Zieldistanz darstellt;
eine Einrichtung (54) zur Gewinnung eines Differenzsignals (Sn–Sf);
einen Komparator (55) zum Vergleichen dieses Signals S1 mit diesem Differenzsignal (Sn–Sf) zur Erzeugung eines Signals Vd, wenn die verglichenen Signale im wesentlichen gleich sind; und
einen Verzögerungsanweisungsgenerator (56), der auf das Signal Vd so anspricht, daß er der Antriebseinrichtung eine Verzögerungsanweisung zuführt.

2. Vorrichtung nach Anspruch 1, in welcher das Signal Sf als ein Rückführungssignal der Vorrichtung verwendet wird.

3. Vorrichtung nach Anspruch 1, in welcher die Vorrichtung eine Spritzgießmaschine umfaßt, die aus einem bewegbaren Metallspritzformteil (30C), einem stationären Metallspritzformteil (30B), einer Einspritzdüse (5) zum Einspritzen plastifizierten Kunstharzes in einen durch das bewegbare und stationäre Metallspritzformteil, wenn diese Teile miteinander verklemmt sind, definierten Hohlraum, einer Schraube (1), die zur Formung des plastifizierten Kunstharzes in dieser Düse enthalten ist, einer Antriebseinrichtung (13) zur Relativbewegung des bewegbaren Metallspritzformteils und der Düse und einer zweiten Antriebseinrichtung (7) zur Drehung dieser Schraube gebildet ist, wobei die Vorrichtung ferner einen Umdrehungsanzahlsensor (8), der durch die zweite Antriebseinrichtung so angetrieben wird, daß er ein Signal Rf erzeugt, das die Anzahl von Umdrehungen der Schraube darstellt, und eine Einrichtung umfaßt, die dieses Signal einer für die Vorrichtung vorgesehenen Steuereinheit (15) zuführt.

**Revendications**

1. Dispositif pour le contrôle d'une machine comprenant un organe mobile et un organe fixe qui sont mis en contact l'un avec l'autre et séparés l'un de l'autre durant le fonctionnement de ladite machine et des moyens d'entraînement dudit organe mobile, des moyens (51) pour générer un signal S1 représentant une distance entre une position présente dudit organe mobile et un point auquel ledit organe fixe vient s'engager avec ledit organe fixe à une vitesse virtuellement nulle; et des moyens capteurs de position (14) entraînés par lesdits moyens d'entraînement pour produire un signal Sf représentant la position réelle dudit organe mobile, caractérisé en ce qu'il comprend:

des moyens (53) pour générer un signal Sn représentant une distance cible,
des moyens (54) pour obtenir un signal de différence (Sn–Sf);
un comparateur (55) pour comparer ledit signal S1 avec ledit signal de différence (Sn–Sf) pour produire un signal Vd lorsque lesdits signaux comparés sont substantiellement égaux; et
un générateur d'instruction de décélération (56) répondant audit signal Vd pour appliquer une instruction de décélération auxdits moyens d'entraînement.

2. Le dispositif selon la revendication 1 dans lequel ledit signal Sf est utilisé comme signal de contre-réaction dudit dispositif.

3. Le dispositif selon la revendication 1 dans lequel ledit appareil comprend une machine de moulage par injection constituée par un moule mobile en métal (30C), un moule fixe en métal (30B), un gicleur a injection (5) pour injecter de la résine plastifiée dans une cavité définie par lesdits moules mobile et fixe en métal lorsqu'ils seront l'un contre l'autre, une vis (1) contenue dans ledit gicleur pour former ladite résine plastifiée, des premiers moyens d'entraînement (13) pour déplacer ledit moule mobile en métal et ledit gicleur l'un par rapport à l'autre, et des deuxièmes moyens (7) pour actionner ladite vis en rotation, ledit dispositif comprenant en outre un capteur de nombre de révolutions (8) entraîné par lesdits deuxièmes moyens d'entraînement pour générer un signal Rf représentant le nombre de révolutions de ladite vis, et des moyens pour appliquer ledit signal à un contrôleur (15) prévu pour ledit dispositif.

FIG. 1

EP 0 253 906 B1

F I G. 2

EP 0 253 906 B1

**F I G. 3**

F I G. 4

F I G. 5

## FIG. 6a

```
        START
          │
          ▼        ╭110
┌─────────────────────┐
│ SET  SPEED  V       │
│ AND  INCREMENT/     │
│ DECREMENT           │
│ THEREOF   ΔV        │
└─────────────────────┘
          │        ╭111
┌─────────────────────┐
│ CALCULATE  SI       │
│ FROM  V  AND  ΔV    │
└─────────────────────┘
          │        ╭112
┌─────────────────────┐
│ SET  TARGET         │
│ DISTANCE  Sn        │
└─────────────────────┘
          │        ╭113
┌─────────────────────┐
│ CALCULATE           │
│ P = Sn - SI         │
└─────────────────────┘
          │        ╭114
┌─────────────────────┐
│ SET  FEEDBACK       │
│ SIGNAL  Sf          │
└─────────────────────┘
          │        ╭115
         ╱╲
 NO    ╱    ╲
◄─────◄  P = Sf ? ►
        ╲    ╱
         ╲╱
          │ YES    ╭116
┌─────────────────────┐
│ ISSUE               │
│ DECELERATION        │
│ INSTRUCTION         │
│ TO  MOTOR  13       │
└─────────────────────┘
          │
          ▼
        END
```

## FIG. 6b

```
        START
          │
          ▼        ╭120
┌─────────────────────┐
│ SET  SPEED  V       │
│ AND  INCREMENT/     │
│ DECREMENT           │
│ THEREOF   ΔV        │
└─────────────────────┘
          │        ╭121
┌─────────────────────┐
│ CALCULATE  SI       │
│ FROM  V  AND  ΔV    │
└─────────────────────┘
          │        ╭122
┌─────────────────────┐
│ SET  TARGET         │
│ DISTANCE  Sn        │
└─────────────────────┘
          │        ╭123
┌─────────────────────┐
│ SET  FEEDBACK       │
│ SIGNAL  Sf          │
└─────────────────────┘
          │        ╭124
         ╱╲
 NO    ╱    ╲
◄─────◄ SI = (Sn - Sf)? ►
        ╲    ╱
         ╲╱
          │ YES    ╭125
┌─────────────────────┐
│ ISSUE               │
│ DECELERATION        │
│ INSTRUCTION         │
│ TO  MOTOR  13       │
└─────────────────────┘
          │
          ▼
        END
```